Europäisches Patentamt

European Patent Office

Office européen des brevets

(19)

(11) Publication number : **0 519 853 A2**

# (12) EUROPEAN PATENT APPLICATION

(21) Application number : **92480070.9**

(22) Date of filing : **21.05.92**

(51) Int. Cl.⁵ : **G06F 15/72**

(30) Priority : **17.06.91 US 716579**

(43) Date of publication of application :
**23.12.92 Bulletin 92/52**

(84) Designated Contracting States :
**DE FR GB**

(71) Applicant : **International Business Machines Corporation**
**Old Orchard Road**
**Armonk, N.Y. 10504 (US)**

(72) Inventor : **Vogelsberg, Robert Eric**
**1345 A Bear Mountain Drive**
**Boulder, Colorado 80303 (US)**

(74) Representative : **Schuffenecker, Thierry**
**Compagnie IBM France, Département de Propriété Intellectuelle**
**F-06610 La Gaude (FR)**

(54) **Hardware-assisted mapping for APA displays.**

(57) Auxiliary hardware controlled by a processor to format data for an all-points-addressable display. Special purpose logic operating according to commands and image data from a processor formats pel information in a page memory. Through-put is increased by coupling the hardware to receive commands and data via a write-through cache memory.

FIG.2

EP 0 519 853 A2

Documents Incorporated by Reference

Patent applications serial number 473,014 (filed January 31, 1990) and serial number 591,354 (filed October 1, 1990), assigned to a common assignee as the present case, are here-by incorporated by reference for showing the manner by which images are mapped into a page memory for an all-points-addressable display, typically a printer.

Background and Summary of the Invention

This invention relates to control of data presentation by a processing system used to control the manner by which data, in the form of images, patterns, or characters, are arranged for visual display and particularly to special peripheral hardware under the control of a system processor for composing a display map, especially a page map memory for an all-points-addressable memory.

Cache memories improve the transfer rate of data between a processor and the memory to increase overall processing speeds.

The cache memory is made faster than the main memory but has a smaller capacity. It is transparent to the programs run on the processor because the main memory addresses are used in the processor instructions.

Conceptually, efficient use of the cache depends on a high probability of usage of data in the same, small number of main memory locations, i.e., adjacent data that is used repeatedly.

Data is rapidly retrieved from the cache memory and is written faster than to the main memory. When writing to the cache, there is usually a write-through to the main memory so that the latter's data is kept current. The write-through operation is independent from the cache so the cache is able to work at its full speed.

Addressing the cache requires special mapping techniques because the number of bits used to address the main memory is greater than those to address the cache. A 22-bit address to a main memory storing four million words must be converted or translated to a 12-bit address of a cache storing four thousand words.

If the word being addressed by the processor is not in the cache, it is read from the main memory to the processor and simultaneously stored in the cache at its converted or trans-lated address. Having to retrieve each successive word from the main memory causes thrashing which defeats the advan-tages of using a cache.

Data cache memory organizations as used in microprocessor systems suffer significant performance degradation when used in applications requiring nonsequential, nonrepetitive read and write accesses across large memory spaces. An example of such an application is building a bit mapped page image.

Modern high function page printer control units often create the final output page image from a coded input data stream. The data input stream typically comprises ASCII or EBCDIC text characters, graphic drawing orders, e.g., line segments and area fills, compressed or uncompressed image objects, and various formatting and positioning control characters. The printer control unit transforms the coded data into appropriately scaled and oriented bit images at a resolution matching the printer's, e.g., 240 pels per inch or 300 pels per inch. It builds the output page image by writing the individual images into a memory space which has been defined to contain the final, completed page image. Objects are placed in the page image in the order they ap-pear in the data stream. Writing an object into the page image is actually a multistep process of reading the old data from the page map, intersecting the new object with the old data, and writing the resulting image back into the page map.

In a typical bit mapped page application, the page image is ar-ranged in memory as a linear sequence of bits. For example, if the page dimensions are 8-by-10 inches, the bit resolution is 300 bits per inch, and the memory is organized into 32-bit words, the first line of the page image is stored in the first 75 words (2400 bits) of the memory space as-signed to the page. The second line of the page image begins with the 76th word in the memory space. This pattern is repeated for the entire page. In the above example, the page would be stored as 3000 lines of 75 words each.

If the processor composing the page image uses a data cache, the page map organization causes severe performance degradation of the system. The processor data cache algorithms are designed to operate efficiently when data is stored substantially sequentially and the same locations are repetitively accessed. These conditions are not present in the page map writing process. For the above page map example, writing a vertical line in the final page requires writing every 75th word in the 225,000 word array once. Such an oper-ation runs more slowly with a data cache than without one since each access causes an entire data cache line to be fetched from the main memory and subsequent ac-cesses cause the line to be discarded and a new line fetched. Disabling the data cache function for the page image memory area will eliminate the resulting cache thrashing, assuming it is possible to disable the specific processor data cache selectively. The overall process, however, will still run more slowly than normal because the processor must wait for main memory read and write accesses for each operation.

U. S. Patent 4, 695, 838 discloses the use of a read-write memory and a modified tag register in order to control modi-fication of an image to be displayed on an as-needed indi-vidual pel line basis, i. e., nonsequentially.

U.S. Patent 4,800,431 discloses use of a DRAM frame buffer controller to interface between processor and output. Frames can be accessed by the processor using working and shadow registers. Pixels can be read-masked or write-masked using an external lookup table or a simple external latch. The microprocessor interface includes DMA to frame buffer moves. The microprocessor also uses an internal cache to store a window of data, thereby reducing latency.

U.S. Patent 4,816,814 discloses use of a frame buffer or cache to modify the addressing of data to be supplied to an all-points-addressable raster display. Vector generation architecture manipulation resembles a bit by bit write-only mode.

U.S. Patent 4,916,541 discloses a picture processor comprising a field or frame memory array, a line buffer memory which is switchable to a read-only line buffer memory, a write-only line buffer memory, and an address generating circuit section.

U.S. Patent 4,958,302 discloses caching tiles (a collection of pel locations) of a programmable size to be mapped into a frame buffer. Addressing for accessing nonsequentially can be changed according to tile size and shape. The system is used for raster display of a workstation.

U.S. Patent 4,947,342 discloses using a frame buffer to interpolate changes in a raster display. A DMAC controls DMA data transfers between main memory and an output device such as a printer.

U.S. Patent 4,882,683 discloses a permuted bit map architecture giving cellular addressing and frame buffer control for a raster device, e.g., an all-points-addressable print-er.

U.S. Patent 4,876,651 discloses the use of a cache memory to store arbitrary x and y addresses in memory segments, making it capable of nonsequential addressing. A video generator then converts accessed bit mapped pels signals to form a display on a CRT.

U.S. Patent 4,651,278 discloses merging different types of data or pages of data on a single printed page for an all-points-addressable printer using software.

U.S. patent 4,991,108 shows a network for coupling four stations, two of which scan documents to supply text and graphic information, respectively, to the network for coupling to another station that includes a computer processor. The processor formats the data from the other two stations into pages for printing by a laser printer in the fourth station.

U.S. patent 4,954,970 teaches TV-type overlay hardware using a mixer for displaying a background and an overlay image. Its teachings are not applicable to hardware format- ting under computer control.

U.S. patent 5,001,653 relates to a page printer which receives and stores coded character data and commands repre-senting graphic images. Raster images are created from the commands and stored. The stored coded character data and stored images are combined in a bit map memory by a processor for serial output to the printer mechanism of the printer.

The prior art does not describe or teach the use of auxiliary hardware for handling the formatting of data for display. The prior art uses the computer to perform such oper-ations.

This invention eliminates the performance problem by providing a unique memory subsystem with hardware-assist facil-ities to perform the page image intersection operations and in a manner that does not interfere with data cache opera-tion used for other memory operations. The memory subsystem attaches to the the system bus or between the processor and the cache and is designed to be used as a write-only memory space by the processor. The hardware facilities within the memory sub-system provide all the page map build function that would otherwise be done by shifts, reads, logical oper-ation, and writes performed by the processor. During the page build process, the processor reads the input coded data stream, translates the formatting and positioning control characters, and fetches or creates the image based on the output objects supplied by the processor. When the processor is ready to insert the object to the final page map, the processor merely writes the image data for the object into the memory locations assigned to the write-only hardware instead of the usual process of aligning the object to the page map boundaries, reading the page map, logically intersecting the old data with the new, and writing the page map. All the operations required to insert the data with the page map are performed by the hardware-assist functions. The write-only hardware has sufficient input buffering to accept immediately the data from the processor and to allow the processor to continue executing other functions while the write-only hardware completes the page map merge function independently from the processor.

In accordance with the invention, data representing text or images to be displayed and operations to be performed on the text and images are supplied and stored as words. The data words to be displayed are stored to permit shifting so as to align the data words with their proper position in a page memory wherein a page is constructed. A combining device merges the data already in the page memory with new data to be added and the result is stored in the page memory. Fill or color patterns can be added to the page images via the combining device.

Brief Description of the Drawing

The invention is described in detail by referring to the various figures which illustrate specific embodiments of the invention and wherein like numerals refer to like elements.

FIGS. 1A and 1B are block diagrams of the organizations of systems in which the invention is useful.

FIG. 2 is a hardware system according to the invention.

FIG. 3 is an illustration of the manipulations performed on images for insertion in a page memory.

## Description of the Preferred Embodiment

The exact form of the interface between the processor and the hardware depends on the specific design of the processor and cache subsystem. If the cache subsystem allows areas of memory to be directly mapped through to the processor with-out cache or memory address translation, the write-only memory page map can be assigned to such an area and treated as a normal memory space. If the cache subsystem does not allow direct memory map-ping without cache intervention, then access to the hardware is made indirectly. A range of addresses corresponding to a cache line and a TLB (Translation Lookaside Buffer) address is assigned to the hardware interface. When the processor has an object to add to the page map, the starting address of the object is written to this range followed by the image data for the object. The hardware may use the initial data input to specify the address within the page map of the object and then accept the subsequent data items as image data to be inserted in the page map. Control information to specify the detailed operation of the hardware is passed to the memory subsystem in a similar fashion.

The hardware will typically have a number of optional modes of operation which can be controlled by the processor. In particular, the image mixing rules to be used, e.g., Boolean functions, bit alignment of the input image objects, bit padding convention, and control for other hardware assist facilities can all be specified prior to the overall opera-tion or as additional control information passed to the hardware with each image object.

Finally, the hardware is provided with a local DMA facility to unload the completed page map to the final output device via the main processor bus or a secondary local bus. The main processor controls the DMA facility and supplies the starting address and length of the page map to be unload-ed. Other DMA control information includes specification of padding characters and whether to clear or to reset the page map as it is unloaded.

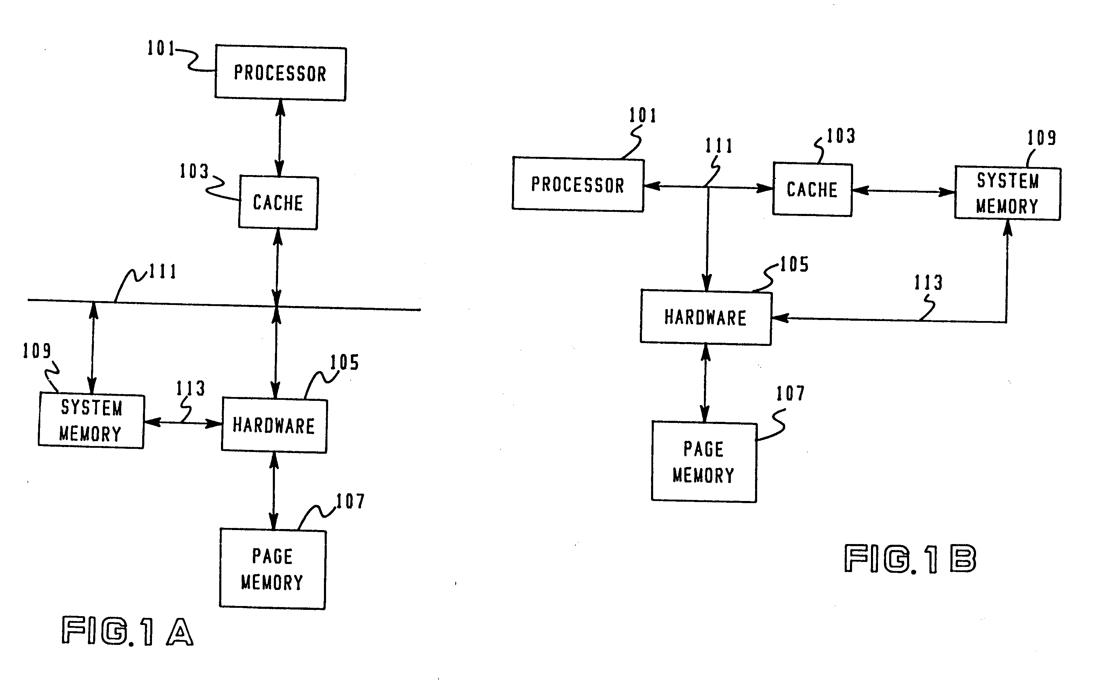

The systems configuration in which the invention is useful can be of several types. FIGURE 1A illustrates one specific system arrangement where the processor 101 operates through a cache memory 103 to a system bus 111. A system memory 109 is also coupled to the system bus 111. The hardware 105 is coupled to a page memory 107. The hardware 105 also commu-nicates with the system memory 109 via either the system bus 111 or an independent port 113.

The processor 101 operates to and from the cache memory 103 which operates faster than the system memory 109. Typically, any write operation to the cache memory 103 is passed through to the system memory 109 so that the latter is always up to date. When a read from the cache memory 103 is attempted of data not in the cache memory 103, an automatic read from the system memory 109 to the cache memory 103 is executed.

When composing a page for a printer, the write through capability of the cache memory 103 is utilized to transfer commands and data to the hardware 105. The hardware 105 composes a page in the page memory 107 which is coupled to a printer buffer (not shown) for printing. During this pro-cess, the hardware 105 may access the system memory 109 to obtain fill patterns, character outlines, or images to be placed into the page memory 107.

FIGURE 1B shows the same system modules coupled in a different configuration. The processor 101 is coupled to both the hardware 105 and the cache memory 103, the latter being coupled directly to the system memory 109. The hardware 105 is coupled to the page memory 107 for composing a page there-in and for transfer to a printhead or print buffer for dis-play purposes.

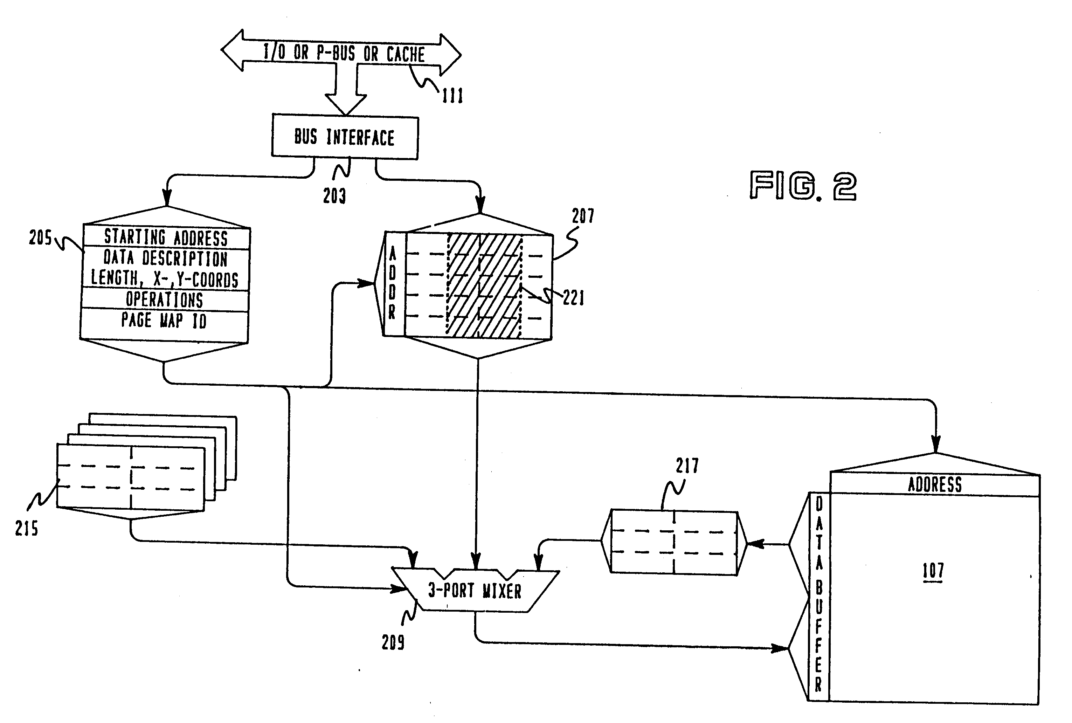

FIGURE 2 shows an embodiment of the hardware 105 (FIGURE 1). The bus interface 203 couples an I/O bus or processor bus or cache memory 111 to the hardware system.

A set of control registers 205 is supplied for controlling the operation of the hardware. Typically, the control registers, which are loaded through the bus interface 203, would hold the starting address of new data, description of the data, the length, the X,Y coordinates of the new data (object) within the page memory, the operations to be per-formed, and perhaps even a page identification number where more than one page may be composed within the page memory. An alignment memory 207 is supplied being typically two words in width containing from 1 to n double words. For example, if the input data for the images or text to be printed is made up of 32-bit words, then the width of the words in the alignment memory 207 is 64 bits. This permits an image to be composed without restriction to word bounda-ries. For example, the shaded portion 221 in the alignment memory 207 is positioned for insertion into the page memory 107 according to the X,Y coordinates supplied from the con-trol registers 205.

A source of pattern bits, color code, or fills 215 are supplied for controlling the color or fill of characters or images to be printed.

A three port mixer 209 receives input signals from the pattern or color source 215, new data from the alignment memory 207 and old data from a buffer store 217. The old data refers to data in the page memory 107 which is to be combined with the new data from the alignment memory 207.

The three port mixer 209 is controlled according the operations in the control registers 205. Among the operations typically used are shift operations that are performed in the alignment memory 207, and AND,OR and NOT logical operations which are performed by the three port mixer to combine the old data with the new data and the pattern or color information.

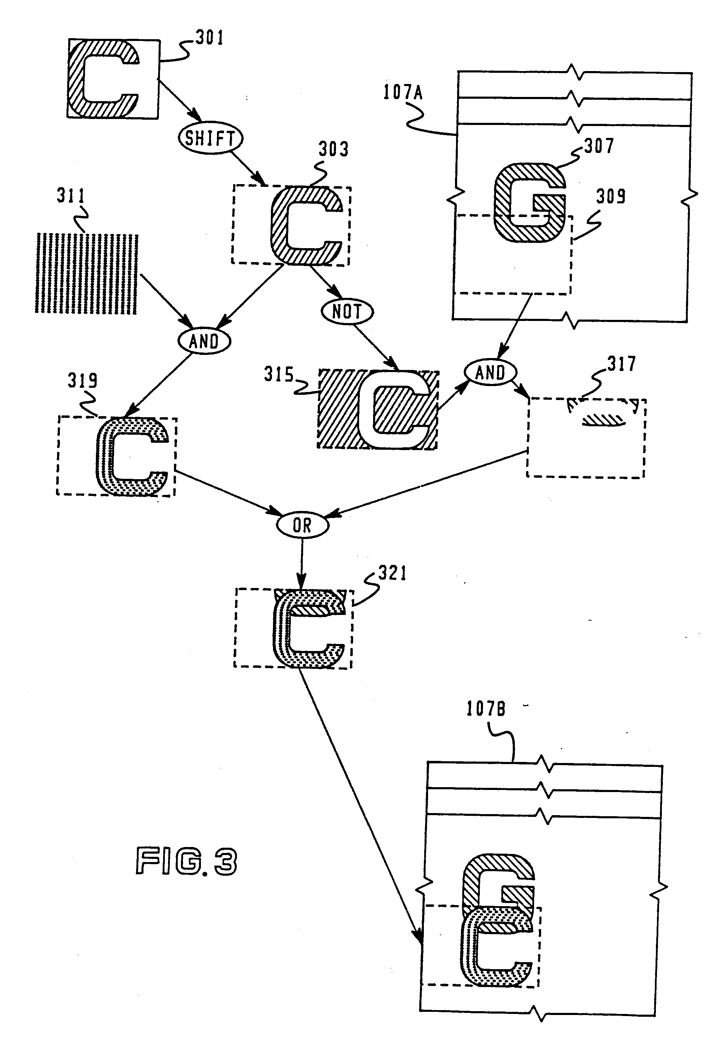

FIGURE 3 illustrates an example of an operation per-formed by the hardware of the invention. A character block 301 contains the letter C as received via the bus interface 203 of FIGURE 2 or, if coded, as retrieved from a pattern store section in the page map memory 107. Performing a shift operation under the control of the control registers 205 of FIGURE 2, the C character is shifted to align it with the prescribed loca-tion in the page map memory 107. The page map memory 107A (before adding new object) already contains a character G 307 which is to be partially overlayed with the C character as shown by the dotted overlay region 309 corresponding to the contents of the alignment memory 207 in FIGURE 2.

The X- and Y- addresses in the page memory 107 are stored by the control registers 205 in FIGURE 2 to correctly locate the contents of the new data in the alignment memory 207 of FIGURE 2.

The fill pattern 311 from a pattern source 215 in FIGURE 2 is ANDed with the character C from the alignment memory 207 of FIGURE 2. At the same time, the NOT operation is per-formed by the three port mixer to reverse the bit values of the contents of the new data contents of the alignment memory 207 to produce a reverse character 315 which is ANDed with the old information from the page memory 309 to produce a partial image 317.

The filled character 319 is ORed with the partial image 317 to form a result image 321 which is stored in the page map memory 107B (after adding new object) such that the old data and the new data overlap.

While the invention has been particularly shown and described with reference to a preferred embodiment thereof, it will be understood by those skilled in the art that various changes and modifications in form and details may be made therein without departing from the spirit and scope of the invention according to the following claims.

**Claims**

1. Apparatus for controlling composition of page memories comprising, in combination:

  means for supplying data representative of text or images to be displayed and operations to be performed on the text or image data, said data supplied as words;

  memory means for storing page images as bit maps, said memory means having address means;

  input storage means for storing data to the be added to said page images, said input storage means being capable of storing two contiguous words;

  control means responsive to said data supplying means for storing and for executing said operations to be performed;

  address means in said input storage means responsive to said control means for positioning words of said data sup-plied as words within said input storage means; and

  means for combining in said memory means said data to be added to said page images from the input storage means with page images in said memory means.

2. The apparatus claimed in claim 1 wherein said combining means includes mixer means responsive to said input storage means and said memory means for supplying output data repre-senting the combination of said data to be added and data in said memory means corresponding to the location at which said data to be added is to be stored, said combination operations responsive to said control means; and

  means for storing the output data from said mixer means in said memory means.

3. The apparatus claimed in claim 2 further including:

  pattern means for supplying data representative of fill or color for images to be displayed; and

  means for coupling said pattern means to said mixer means.

4. The combination comprising:

  input means for receiving input data repre-senting text and images to be displayed and commands for manipulating text and image data;

  control means for storing said commands;

  alignment means for buffering the input data representing text and images to be dis-played and responsive to said con-trol means for positioning said data within the alignment means;

  memory means for storing in page format data to be dis-played;

  mixing means for combining, in accordance with commands received from said control means, the contents of said align-ment means with the contents of the location said memory means; and

  storing means responsive to said control means for storing output data from said mixing means in said memory means.

5. The combination claimed in claim 3 further including:

pattern means coupled to said mixing means for storing data specifying fills or color of said images to be dis-played.

6. A system for composing pages for display where a page is made up of objects, some of which may overlap, said sys-tem having a control processor and hardware for composing said pages, comprising, in combination:

coupling means for transmitting data representing text or images to be displayed and commands specifying the handling of said data from the processor to the hardware; and

composing means in the hardware for composing a page ac-cording to said commands.

7. The combination claimed in claim 6 wherein said coupling means includes cache memory means.

8. The combination claimed in claim 7 wherein said composing means comprises:

control means for storing said commands and supplying control signals;

intermediate storage mean for storing said data and arranged to position said data in response to control signals from said control means;

memory means for storing said pages;

means for combining data from said intermediate storage means and said memory means; and

means for storing combined data from said combining means in said memory means.

FIG.1B

FIG.1A

EP 0 519 853 A2

I/O OR P-BUS OR CACHE

111

BUS INTERFACE

203

FIG. 2

205

STARTING ADDRESS
DATA DESCRIPTION
LENGTH, X-, Y-COORDS
OPERATIONS
PAGE MAP ID

207

ADDR

221

215

217

ADDRESS

DATA BUFFER

107

3-PORT MIXER

209

FIG.3